# EUROPEAN PATENT APPLICATION

(11) **EP 2 105 682 A2**
(43) Date of publication of application: **30.09.2009**
(21) Application number: 09475001.5
(22) Date of filing: 25.03.2009
(51) Int. Cl.: F24J 2/24, F24J 2/46, F24J 2/50

(54) **All-plastic sandwich solar collector**

(30) Priority: 26.03.2008 SK 500112008
(71) Applicant: DANAKTA SunCol s.r.o., 851 01 Bratislava (SK)
(72) Inventor: Kopacka, Milan, 900 33 Marianka (SK); Frlicka, Jozef, 851 01 Bratislava (SK)
(74) Representative: Majlingova, Marta

(57) **Abstract**

All-plastic, sandwich solar collector designed as self-supporting and spatially flexible, comprising a body formed from a frame, two outer plates (2), a top plate and a bottom plate, between which a heat absorber plate (3) is placed parallel, whereby both outer plates (2) are designed as transparent plastic panels containing throughout the whole length at least one row of channels separated from one another, and the heat absorber plate (3) likewise contains throughout the whole length at least one row of flow channels separated from one another and at both ends throughout the whole width of the heat absorber plate (3) is fitted with a profile containing a connecting gutter (19), a distribution channel (20) and an end piece (21) of the distribution channel for inlet or outlet of the heat-bearing fluid, **characterised in that** the outer plates (2) are fixed in the frame (1), which is formed from straight parts and corner elements, and at least the straight parts of the two longer diametrically opposed sides from the internal side of the frame (1) are fitted with a guidance ledge (22), for seating the heat absorber plate (3), whereby the guidance ledge (22) is, in the middle area, as regards the length of the collector, is fitted with at least one fixing pin (10) for freely snapping into at least one slot (4) at the respective points of the edges of the heat absorber plate (3) for allowing dilation movement of the heat absorber plate (3) lengthwise and crosswise, whereby the frame (1) is fitted with lengthwise side openings (12), and each lengthwise side opening (12) is equipped with a flexible collar (13) for sealing the space between the end piece (21) of the distribution channel (20) and the frame (1), whereby the parallel position of the heat absorber plate (3) between the top plate (2) and the bottom plate is maintained by a system of spacers (5) fixed on the inner surfaces of the outer plates (2), and, between the said outer plates (2) and the heat absorber plate (3) an insulation layer is created in the form of an air gap given by the size of the spacers (5).

## Description

### Field of invention

The present invention relates to all-plastic solar collectors made from plastic panels containing internal hollow channels arranged in rows running along the whole length of the panels. The plastic panel may contain one or more rows of channels.

### Background of invention

Solar collectors for heating water are well-known and widespread throughout the world. They are produced in many variants, from plastic, the simplest of which are formed by a coiled black tube with low effectiveness, through aluminium in standard rendering to vacuum ones with high effectiveness and which can be used also in winter months. The construction of classic bath collectors is most usually based on individual layers of insulation, heat absorbers, etc inserted into a pre-moulded plastic, metal, or most usually aluminium, bath and then covered by glass. A drawback of them is their relatively high price, weight, overall inflexibility, fragility due to their glass parts, weak resistance to an aggressive environment (coastal areas), and their strange appearance on buildings.

WO 2007/052158 describes a transparent solar collector with overheating protection. The collector comprises an absorbing plate made of transparent material with reflective layer adhered to the back side and two-phased working fluid streaming through the plate. The two-phase working fluid consists of transparent liquid and high solar energy-absorbing coefficient particles more dense than the liquid. During normal functioning, solid-phase particles are uniformly dispersed in the liquid and absorb solar energy, which results in heating of the working fluid. When the highest allowed temperature is reached the pump is stopped, causing solid particles to settle down to the bottom of the absorbing plate. Fluid remaining in the plate absorbs only a small amount of solar energy because of its low absorption coefficient. The possibility of collector overheating is thereby eliminated.

WO 2002/084182 describes a solar collector comprising a housing and a thermal absorber arranged in the said housing. The thermal absorber has flow channels for a medium. A particularly simple construction may be achieved where the housing is at least partly transparent and connected to two face profiles, which seal the housing and the flow channels of the heat absorber. A disadvantage of it is that the collector's housing is firmly connected with the heat absorber via the face profiles, and does not allow the heat absorber dilation movement, thus leading to mechanical damage of the whole collector.

The aim of the solution according to the present invention is to eliminate certain mentioned negative properties.

### Summary of invention

The said deficiencies are solved by the present invention, the essence of which lies in the fact that the collector is a simple sandwich construction made of commonly available plastic construction materials.

The all-plastic sandwich solar collector is designed as self-supporting and spatially flexible, comprising a body formed of two outer plates, a top plate and a bottom plate, between which a heat absorber plate is placed parallel, whereby both outer plates are designed as transparent plastic panels containing at least one row of channels separated from one another and running throughout the whole their length, and containing spacers on the internal surfaces for ensuring a constant distance from the heat absorber plate. The heat absorber plate likewise contains throughout the whole length at least one row of flow channels separated from one another and at both ends throughout the whole width is fitted with a profile containing a connecting gutter, distribution channel and a distribution channel end-piece for the inlet or outlet of the heat-bearing fluid. The essence of the collector according to the present invention is that the outer plates are fixed in a frame formed from straight parts and corner elements, and at least the straight parts of the two longer diametric sides from the inner side of the frame are fitted throughout the whole length with a guidance ledge for seating the heat absorber plate, and where the guidance ledge in the middle part, as regards the length of the collector, is fitted with at least one fixing pin for freely snapping into at least one slot on the respective points of the heat absorber plate edges for allowing dilation movement of the heat absorber plate both lengthwise and crosswise. Near the corner elements on the long straight parts, the frame is fitted with longitudinal side openings. Each longitudinal side opening is equipped with a flexible collar for sealing the space between the end piece of the distribution channel and the frame, where the parallel position of the heat absorber plate between the top plate and bottom plate is maintained by a system of spacers fixed on the inner surfaces of the outer plates. Between the said outer plates and the heat absorber plate (3) an insulation layer is created in the form of an air gap given by the size of the spacers.

In an advantageous embodiment one of the outer plates forming the top plate may be fitted around its circumference with a frame-connecting element containing a latching member for snapping below the respective inner part of the frame and the top fastening part (8) for firmly connecting the top plate to the upper part of the frame.

In an advantageous embodiment the side openings of the frame can be created as longitudinal openings running lengthwise along the collector for allowing lengthwise movement of the distribution channel end piece in the event of the heat absorber plate's dilation movement.

In another advantageous embodiment a guiding gap for the heat absorber plate is created between the guidance ledge of the frame and the latching member of the frame-connecting element.

In an advantageous embodiment the frame may be fitted with at least two hollow connecting elements for connecting the collector to the bearing construction or for linking collectors to one another.

The frame may be fitted with at least one outer seal created along the outer circumference of the frame for sealing the space between two linked collectors.

In an even more advantageous embodiment the frame may be fitted with two outer seals created along the outer circumference of the frame, where one outer seal is in the upper and the other in the lower part of the frame.

It is advantageous if the upper and lower plate and the frame can be made of polycarbonate and the heat absorber plate of PPE-PS (polyphenylene ether blended with polystyrene), or from PPE-PA blended with polyamide, PPO - polyphenyloxide, (Noryl™ from the firm Sabic).

In another advantageous embodiment at least one inner surface of an outer plate or inner surface of the heat absorber plate can be treated with a reflective or antireflective layer and/or an absorption layer.

The side openings of the frame can be created as longitudinal openings running lengthwise along the collector body for allowing lengthwise movement of the distribution channel end piece in the event of the heat absorber plate's dilation movement.

In another embodiment the heat absorber plate can contain two rows of flow channels, where one row is filled with an accumulation substance and the heat-bearing fluid flows along the other row, thus increasing the collector's accumulation ability.

A collector containing only one row of channels is suitable for countries with a hot climate, where it is not required for the outer plates to have good insulation properties.

A solar collector according to the present invention can be used as a roofing part for covering a swimming pool, garden shelter, car port or winter garden.

Such construction, in contrast to the construction of classic bath collectors, is self-supporting and allows solar collector constructions to be made as large as required, without limitation. Other properties reported by a solar panel according to the present invention are, for example, as follows: it is all-plastic, flexible, which allows the creation of new shapes, e.g. arches. It is resistant to mechanical impacts and is light. It is advantageous if the thermal dilatability coefficient of all components is the same or very near.

A further advantage is that it is completely recyclable, non-harmful to health, because it is made of material that is non-toxic and suitable for contact with food. The material from which the collector according to the present invention is made is resistant to all types of aggressive environment, thereby allowing even aggressive heat-bearing media (e.g. NaCl aqueous solutions) to be used for other types of collectors. If necessary, the option of translucence is possible. The collector can be manufactured as transparent - something which other materials do not allow. In contrast to classic collectors, the collector need not be designed as exclusively black, but can be coloured as required. Its colouring can be adapted to the surroundings. The projected costs will be around 30 to 50% lower than in the case of a standard collector. A collector according to the present invention represents a new architectural element with very broad variability.

A further advantage of the plastic sandwich collector according to the present invention is that it is so light that it floats on the surface of water.

### Brief overview of figures

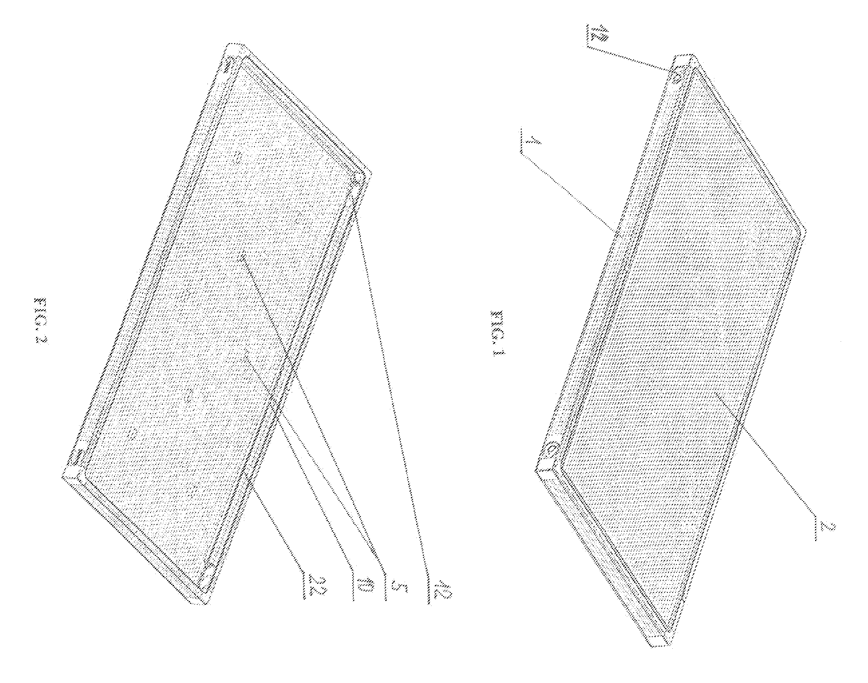

The attached figures show an example embodiment of the collector according to the invention, where Fig. 1 is the overall axonometric view of the collector
Fig. 2 shows the collector frame with the bottom plate inserted;
Fig. 3 shows the top plate of the collector;
Fig. 4 shows the heat absorber plate;
Fig. 5 shows the inner middle part of the longer side of the frame;
Fig. 6 shows a sectional view of the top collector plate with the attached frame-connecting element;
Fig. 7 shows a sectional view of the collector at the place of the fixing pin in the inner part of the frame;
Fig. 8 shows a sectional view of the collector at the place outside the ledge in the inner part of the frame;
Fig. 9 shows a sectional view of the collector at the place of the distribution channel;
Fig. 10 shows a detail of the heat absorber plate with the distribution channel in axonometric view;
Fig. 11 shows the connecting element in assembled state and Fig. 12, 13 and 14 disassembled into individual components.
Fig. 15 shows the frame-connecting element;
Fig. 16 shows a sectional view of the frame;

### Example embodiments of the invention

An advantageous production material for the top and bottom plate as well as of the frame is polycarbonate or polyethylene terephthalate; heat absorber plate (3) can be made of PPE - polyphenylene ether or PPO - polyphenylene oxide, or modifications of them may, for example, be blended with polystyrene or polyamide, and sealants and adhesives may, for example, be on a silicon base.

Air can be used as the basic insulation material; to improve mechanical properties glass fibre may be used as the filling of the basic material.

Fig. 1 shows the all-plastic, sandwich solar collector according to the present invention, comprising a body formed by a frame, two outer plates (2), namely the top plate and the bottom plate and the heat absorber plate (3). The outer plate (2), that is the top plate and bottom plate, are made of a transparent plastic. The heat absorber plate (3), which is darker - almost black, is inserted parallel between them. The top plate, bottom plate and the heat absorber plate (3) contain one or more rows of longitudinal channels, where the heat-bearing fluid flows only through the heat absorber plate (3). All three plates, the two outer plates (2) and the heat absorber plate (3), are inserted in the frame (1), which is made of the same construction material as the outer plate (2), i.e. containing one or more rows of longitudinal channels in its direct parts, which are connected by corner elements. The air gaps between the outer plates (2) and the heat absorber plate (3) form the collector's insulation layer. The depth of the air gap is given by the construction of the frame (1) and the size of the spacers (5).

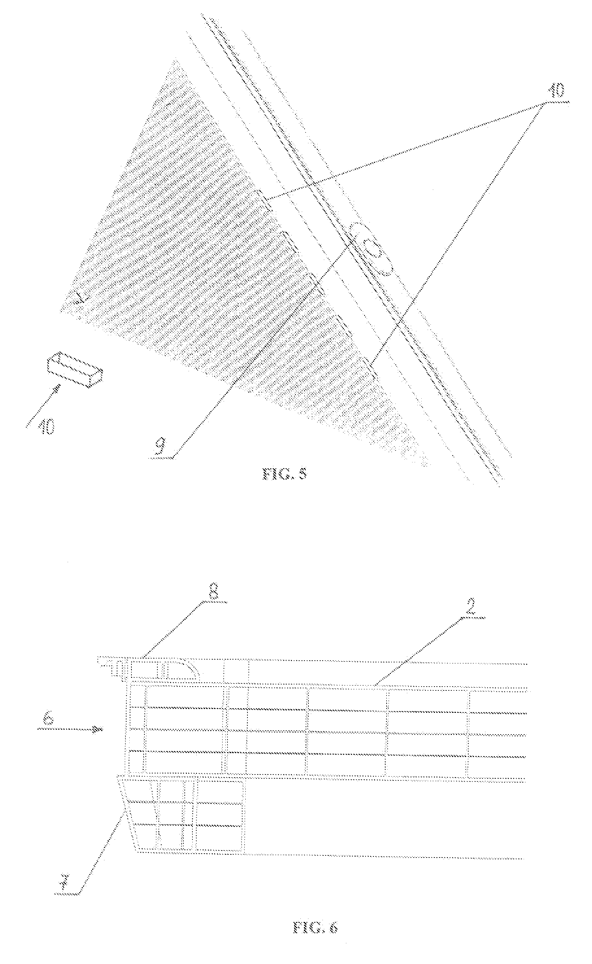

Frame (1) as shown in Fig. 2 has a rectangular shape, formed from two long and two shorter straight parts connected by corner elements. Plate (2), which in this case is the bottom plate, is inserted in the frame (1). The bottom plate is fitted with spacers (5) on its inner surface. The spacers (5) in this case have the shape of a cuboid shell, but can also have the shape of a cylindrical shell or other shape. Near the corner elements, side openings (12) are created on the longer straight parts. The long straight parts of the frame are fitted from the inner side with a guidance ledge (22), for lodging and guiding the heat absorber plate (3). The bottom outer plate (2) is inserted between the bottom part of the guidance ledge (22) and the bottom part of frame (1). The inner surface of the bottom outer plate (2) is fitted with spacers (5). Approximately in the middle of the long straight parts of the frame (1), on the guidance ledge (22) fixing pins (10) are embedded for latching into the slots (4) in the side edge of the heat absorber plate (3). (See Fig. 5) The detail of the middle area of the longer straight part of the frame (1) is depicted in Fig. 5, clearly showing one of the hollow connecting elements (9), which serves for connecting the collector to the building frame, wall or other supporting structure, or for connecting collectors to one another.

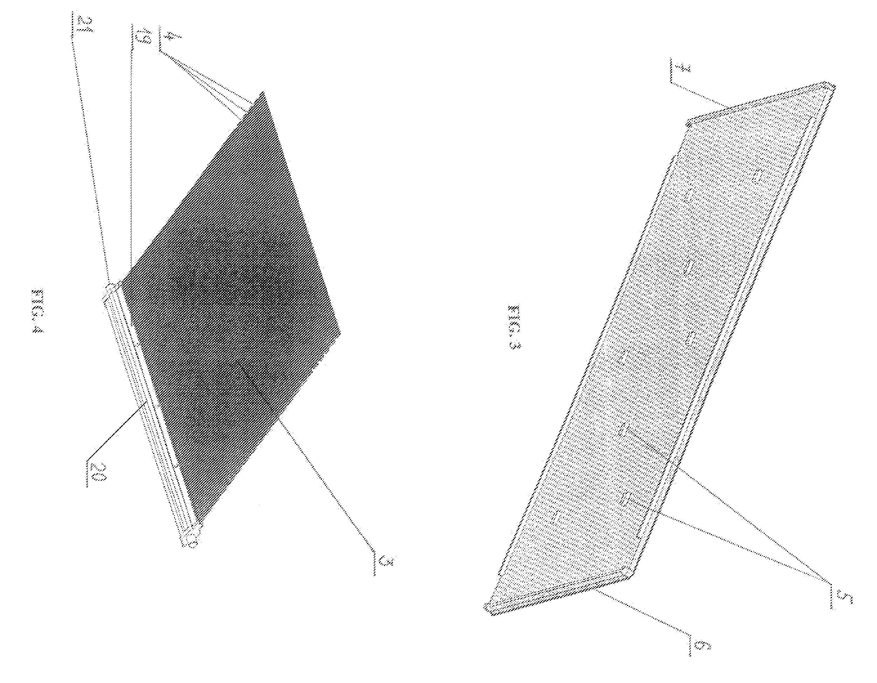

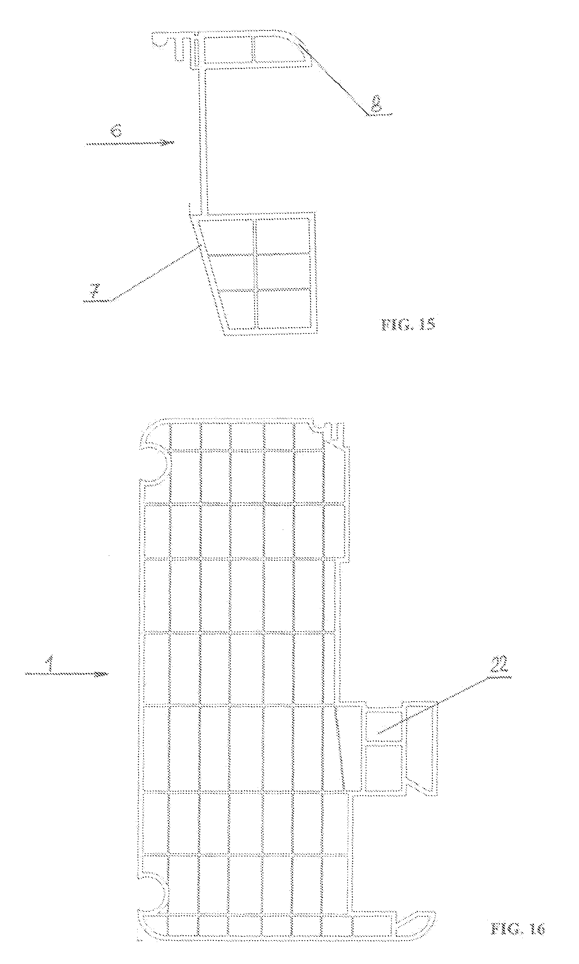

Fig. 3 shows the top plate (2), a detail of which is shown in Fig. 6. The top plate (2) is made from transparent polycarbonate and, in this case, contains four rows of channels. Around the circumference the top outer plate (2) is fitted with the frame-connecting element (6), which is glued or otherwise firmly fixed to it. The frame-connecting element (6), a detail of which is shown in Fig. 15, is composed of a flat part, the size of which is equal to the thickness of the top outer plate (2); on one side this flat part is fitted with a latching member (7), which will go on the bottom surface of the top plate and will snap in by its edge under the respective inner part of the frame (1). The other end of the flat part of the frame-connecting element is fitted with a top fastening part (8), one part of which is firmly attached to the top surface of the top plate (2) and the other part is attached to the upper part of the frame (1), which contains the corresponding connecting elements. See Fig. 16. The outer plates (2) are fitted on their inner surfaces with spacers (5). Both outer plates (2) are of the same shape and same construction, though it is not necessary to connect the frame-connecting element around the circumference on the bottom plate, because it is fixed in the frame (1) between the bottom part of the frame (1) and the bottom part of the guidance ledge of the frame (1).

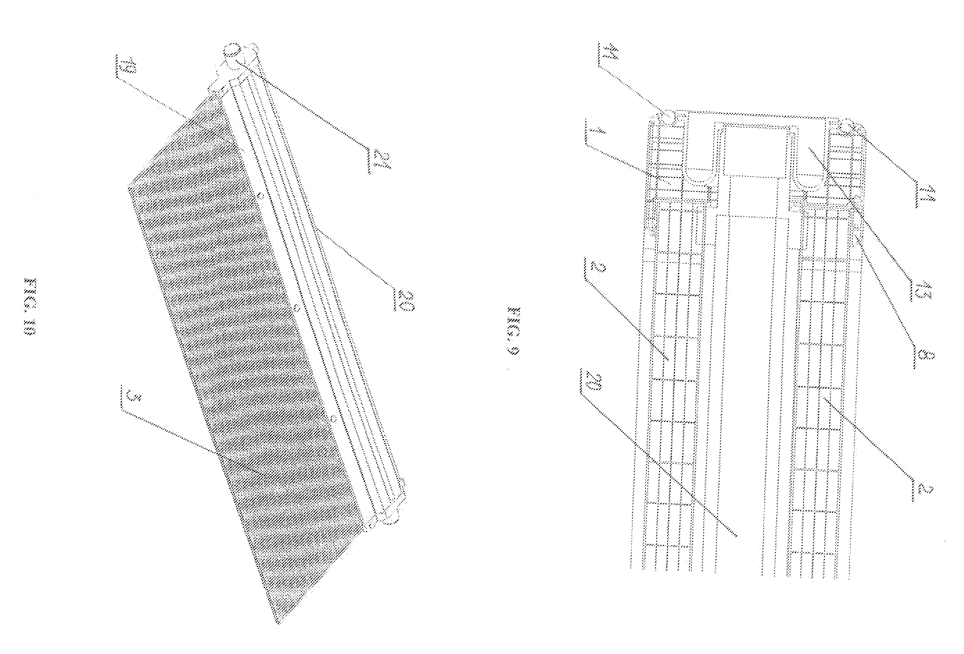

Fig. 4 shows part of the heat absorber plate (3) with one row of flow channels and with the distribution channel (20), which is connected, with the aid of the connecting gutter (19), to the heat absorber plate (3). The distribution channel (20) is ended at both ends with an end piece (21) for eduction of the fluid heat-bearing medium or for connection to another collector. See Fig. 10. In the middle part the heat absorber plate (3) is fitted with at minimum one slot (4), in this case with five slots (4) for receiving the respective number of fixing pins (10) placed on the guidance ledge on the inside of the frame (1).

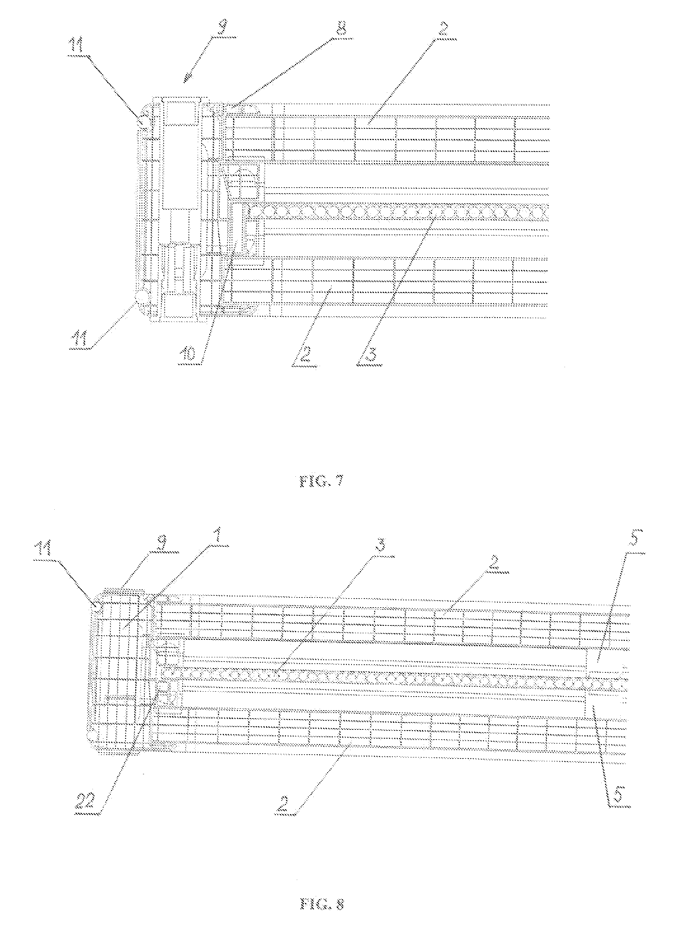

Figures 7 and 8 show a cross-section view of the collector, where Fig. 7 shows a cross-section of the connecting element (9), the frame construction (8) and the connection of outer plates (2) to the frame (1) by means of the frame connecting element (6), which is glued along the circumference of the outer top plate of the collector so that the latching member (7) is glued to the bottom surface of the outer top plate (2) and the top fastening part is glued to the top surface of the outer top plate (2). The fixing pin (10) does not fit tightly into slot (4), rather slot (4) is made with some clearance and allows dilation movement of the heat absorber plate (3), though does not allow such great movement of the heat absorber plate (3) as for the fixing pin (10) to come out of the slot (4). Fig. 8 shows a sectional view of the collector in the area between two slots (4) or pins (10).

Fig. 9 shows a sectional view of the collector across the distribution channel (20). Towards the heat absorber plate (3) the distribution channel (20) is fitted with the connecting gutter (19) for gluing to the heat absorber panel (3). The heat absorber plate (3) can be fixed to the distribution channel also by gluing and by riveting the connecting gutter for greater robustness. The distribution channel (20) at the ends adjacent to the longer straight parts of the frame (1) is fitted with end pieces (21), which pass through the side openings (12) of the frame (1). The side openings (12) of the frame (8) are of oval shape and are fitted with a flexible collar (13) for sealing the space around the end piece (21) and preventing the penetration of humidity and impurities into the collector, and which allows lengthwise dilation movement of the heat absorber plate (3). The flexible collar (13) can be made of rubber, but it is advantageous if it is made of silicon. Along the whole of the circumference of the frame (8), in its upper and lower part two grooves are made in which the outer seals are placed (11). The outer seal (11) serves for sealing the space between two collectors in the case that they are linked.

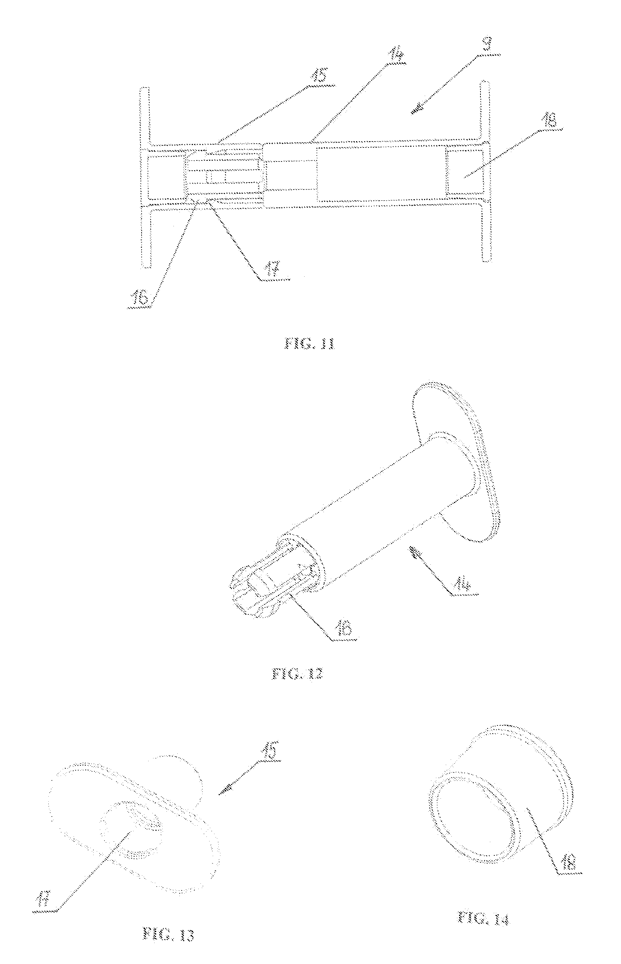

Fig. 11 shows the hollowed fastening element (9), which serves for fastening the collector to the underlying material (the wall) or the supporting structure. The hollow fastening element (9) passes through the collector frame (1). The collector shown in Fig. 1 contains six fastening elements (9), three on each longer side of the collector. The first part (14) of the hollow fastening element (9) has the shape of a hollow cylinder with an expanded head, which can be seen on the frame (1), and which in the lower part contains flexible teeth (16) that enter the second part (15) of the hollow fastening element (9), which likewise has the shape of a hollow cylinder with a head. The second part (15) is fitted on the inner surface with an inner circumferential tooth (17), which fastens the flexible teeth (16) of the first part (14). The first part (14) on the inner surface of the narrowest part contains a thread (not shown in the figure) and a bearing surface for holding the head of the screw (not shown) that passes between the flexible teeth (16) and through the second part (15) of the supporting structure to which the collector is to be fixed. The end openings of the first part (14) and the second part (15) are closed with a stopple (18) for preventing the immanence of humidity and impurities into the collector.

The hollow connecting element (9) allows the collector to be fastened from two sides. The screw, which has a diameter smaller than the diameter of the thread at the narrowest part of the equipment, is inserted from the top. The screw is screwed into the underlying material and the head of the screw fastens and presses the collector through a shank (the narrowest part of the first part (14)) onto the supporting structure. A firm clamping can be created from the bottom by screwing the screw, after it being pierced through the supporting structure, into the thread of the shank of the first part (14) of the hollow connecting element (9). Openings are designed in the collector frame (8) into which a hollow connecting element is positioned and fitted.

A collector according to the present invention is produced in the way that spacers (5) are glued onto the inner surface of the outer bottom panel (2). The individual parts of the frame (1), i.e. the straight parts as well as the corner elements, are glued along the circumference of the outer bottom plate (2) and are connected together as shown in Fig. 2. On the guidance ledge (22) of the frame (1), in the middle part of its longer parts the respective number of fixing pins is glued in. Hollow connecting elements (9) are glued into the respective openings of the frame (1) and stopples 18 are inserted into them from both sides. Subsequently the heat absorber plate (3) is prepared so that the distribution channel (20) is glued via the connecting gutter (19) onto both its ends. Rivets can also be used for strengthening the connection. The heat absorber plate (3) thus prepared is inserted into the frame (1) so that all four end pieces (21) traverse the side openings (12) of the frame (1). Subsequently a flexible silicon collar (13) is inserted and glued into each of the side openings. On the other outer plate (2), which will be the top plate, spacers (5) are glued onto its bottom surface and around the circumference it is fitted with the frame-connecting element (6), which will be glued to it so that the latching member is glued onto the bottom inner surface and the top fastening part is glued to the top outer surface of the top outer plate (2). An adhesive is applied also to the respective parts of the frame (1), which are connected with the top fastening part of the frame-connecting element (6). The top outer plate (2) thus prepared slots and clicks into the frame (1), whereby the latching member (7) will snap under the respective internal part of the frame (1). Finally outer seals (11) are glued into the respective grooves along the outer circumference of the frame.

### Industrial uses

The plastic sandwich solar collector can be used in households, agriculture, industry and everywhere where there is the need for cheap heating of fluids. Its construction allows also direct heating of aggressive media.

### List of references:

frame (1)
outer plates (2)
heat absorber plate (3)
slot (4) for the side face of the heat absorber plate (3)
spacer (5)
frame-connecting element (6)
latching member (7)
top fastening part (8)
hollow connecting element (9) for the supporting structure or for linking collectors together
fixing pin (10) in the middle part from the inner face of the frame
outer seal (11)
side openings (12) of the frame
flexible collar (13)
first part (14) of the hollow connecting element (9), containing an internal thread and flexible teeth (16);
second part (15) of the hollow connecting element (9), containing an internal circumferential tooth (17);
flexible teeth (16) of the first part (14)
internal circumferential tooth (17)
stopple (18)
connecting gutter (19)
distribution channel (20)
end piece (21)
guidance ledge (22) of the frame (1)

## Claims

1. All-plastic, sandwich solar collector designed as self-supporting and spatially flexible, comprising a body formed from a frame, two outer plates (2), a top plate and a bottom plate, between which a heat absorber plate (3) is placed parallel, whereby both outer plates (2) are designed as transparent plastic panels containing throughout the whole length at least one row of channels separated from one another, and the heat absorber plate (3) likewise contains throughout the whole length at least one row of flow channels separated from one another and at both ends throughout the whole width of the heat absorber plate (3) is fitted with a profile containing a connecting gutter (19), a distribution channel (20) and an end piece (21) of the distribution channel for inlet or outlet of the heat-bearing fluid, **characterised in that** the outer plates (2) are fixed in the frame (1), which is formed from straight parts and corner elements, and at least the straight parts of the two longer diametrically opposed sides from the internal side of the frame (1) are fitted throughout their length with a guidance ledge (22), for seating the heat absorber plate (3), whereby the guidance ledge (22) is, in the middle area, as regards the length of the collector, is fitted with at least one fixing pin (10) for freely snapping into at least one slot (4) designed at the respective points of the edges of the heat absorber plate (3) for allowing dilation movement of the heat absorber plate (3) lengthwise and crosswise, whereby the frame (1) is fitted with lengthwise side openings (12), and each lengthwise side opening (12) is equipped with a flexible collar (13) for sealing the space between the end piece (21) of the distribution channel (20) and the frame (1), whereby the parallel position of the heat absorber plate (3) between the top plate (2) and the bottom plate is maintained by a system of spacers (5) fixed on the inner surfaces of the outer plates (2), and, between the said outer plates (2) and the heat absorber plate (3) an insulation layer is created in the form of an air gap given by the size of the spacers (5).

2. Solar collector according to claim 1 **characterised in that** one of the outer plates (2) forming the top plate is fitted around its circumference by a frame-connecting element (6) containing a latching member (7) for snapping under the respective inner part of the frame (1) and the top fastening part (8) for firmly connecting the top outer plate (2) to the top part of the frame.

3. Solar collector according to claim 1 **characterised in that** the frame (1) is fitted with at least two hollow connecting elements (9) for connecting to the supporting structure or for linking collectors together.

4. Solar collector according to claim 1 **characterised in that** the side openings (12) of the frame (1) are created as lengthwise openings running along the length of the collector for allowing lengthwise movement of the end piece (21) of the distribution channel (20) in the case of dilation movement of the heat absorber plate (3).

5. Solar collector according to claim 1 **characterised in that** between the guidance ledge (22) of the frame (1) and the latching member (7) of the frame-connecting element (6) a guiding gap for the heat absorber plate (3) is created.

6. Solar collector according to certain of the claims 1 to 5 **characterised in that** the frame (1) is fitted with at least one outer seal (11) created along its outer circumference.

7. Solar collector according to claim 6 **characterised in that** the frame (1) is fitted with two outer seals (11) created along the outer circumference of the frame (1) , one in the upper and the other in the lower part of the frame (1).

8. Solar collector according to any one of the claims 1 to 7 **characterised in that** the outer plates (2) and the frame (1) as well as the frame-connecting element (6) are made of polycarbonate, and the heat absorber plate (3) of PPE-PS, or of PPE-PA.

9. Solar collector according to any one of the claims 1 to 8 **characterised in that** at least one inner surface of the outer plates (2) and/or at least one surface of the heat absorber plate (3) is fitted with a reflective or antireflective layer and/or absorption layer.

10. Solar collector according to any one of the claims 1 to 9 **characterised in that** the outer plates (2) and the heat absorber plate (3) contain each only one row of lengthwise channels.

11. Solar collector according to claim 1 **characterised in that** the heat absorber plate (3) contains two rows of flow channels, whereby one row is filled with the accumulation substance, and the heat-bearing fluid flows through the other row.

12. Solar collector according to claim 7 **characterised in that** at least one of the outer plates (2) and/or the heat absorber plate (3) contains a weave of reinforcing cord, formed by glass or metal fibre.

13. Roofing component **characterised in that** it is formed by a solar collector according to claims 1 to 12.

14. Use of the solar collector according to claim 1 to 12 as a roofing component in the covering of a pool, garden shelter, car port or winter garden.
